# EUROPEAN PATENT SPECIFICATION

(11) **EP 4 006 416 B1**
(45) Date of publication and mention of the grant of the patent: **06.09.2023**
(21) Application number: 19938682.2
(22) Date of filing: 23.07.2019
(51) Int. Cl.: F22B 37/38, F28F 1/00, G01M 99/00

(54) **HEAT TRANSFER PIPE AND METHOD FOR MANUFACTURING HEAT TRANSFER PIPE**
WÄRMEÜBERTRAGUNGSROHR UND VERFAHREN ZUR HERSTELLUNG EINES WÄRMEÜBERTRAGUNGSROHRS
TUYAU DE TRANSFERT DE CHALEUR ET PROCÉDÉ DE FABRICATION D'UN TUYAU DE TRANSFERT DE CHALEUR

(43) Date of publication of application: 01.06.2022
(73) Proprietor: The Chugoku Electric Power Co., Inc., Hiroshima-shi, Hiroshima 730-8701 (JP)
(72) Inventor: NISHIDA, Hidetaka, Hiroshima-shi, Hiroshima 730-8701 (JP)
(74) Representative: Osha Liang
(86) International application number: PCT/JP2019/028750
(87) International publication number: WO 2021/014549

(56) References cited:
- WO-A1-91/03337
- CN-A- 103 727 521
- JP-A- H 049 651
- JP-A- H0 518 848
- JP-A- H0 798 254
- JP-A- H05 208 203
- JP-A- 2010 014 583
- JP-A- 2016 042 005
- US-A- 4 671 675

## Description

### [Technical Field]

The present disclosure relates to a heat transfer tube and a method for manufacturing a heat transfer tube.

### [Background Art]

For example, inside a power boiler in a thermal power plant, steam tubes (e.g., heat transfer tubes for a superheater, a reheater, and the like) are provided to circulate steam generated by heat exchange between water supplied from a condenser and a combustion gas. A steam tube is configured with a boiler tube made of heat-resistant steel (e.g., lowalloy steel), and if being used continuously at a high temperature exceeding design standards, the steam tube may be damaged as creep damage progresses. Thus, in order to prevent accidents caused by deterioration of the steam tube, inspections are carried out to grasp the combustion state of the boiler and the remaining life of the steam tube, based on measurement results of the surface temperature of the steam tube (see, for example, PTL 1).
PTL2 describes a steam generating apparatus including a steam generator having a shell and numerous double heat-transfer pipes and a detector for the breakdown of the heat-transfer pipes. The upper and lower ends of each inner pipe of the double heat-transfer pipes are joined to a steam-side tube plate and a feedwater-side tube plate, and the upper and lower ends of each outer pipe surrounding the inner pipe are joined to an Na-side upper tube plate and an Na-side lower tube plate. Heat-resistant optical fibers are laid out between the inner pipe and the outer pipe. Some of the heat-resistant optical fibers are connected to the detector for the breakdown of the heat-transfer pipes by way of a gas plenum. The other heat-resistant optical fibers are connected to the detector for the breakdown of the heat-transfer pipes by way of a gas plenum. The detector for the breakdown of the heat-transfer pipes finds temperature distributions of the double heat-transfer pipes on the basis of the scattered light incident from the heat-resistant optical fibers to identify double heat-transfer pipes broken down by the change in the temperature distributions.
PTL3 describes that an outer periphery of a pipe where a hightemperature fluid flows is surrounded by a heat-insulating material. Its outer periphery is covered with a protection material such as alumina. A continuous distribution type light temperature detector, which is an optical fiber, is placed along the heat-insulating material. This detector is connected to a measurement portion. A steam leaked from the pipe is transmitted through the heat-insulating material, is collected by the protection material and is stored at a portion of a spacing, and then is detected by the detector.

### [Citation List]

### [Patent Literature]

PTL 1 (Patent Literature 1): Japanese Patent Application Publication No.2013-190229
PTL 2 (Patent Literature 2): JP 2010 014583 A
PTL3 (Patent Literature 3) : JP H05 18848 A

### [Summary of Invention]

### [Technical Problem]

To grasp the combustion state of a boiler and the remaining life of a steam tube, it is needed to measure the surface temperature of the steam tube over a wide area and obtain a temperature distribution of the surface temperature of the steam tube.

For example, thermocouples are embedded in the surface of a steam tube at regular intervals to measure the surface temperature of the steam tube. However, in the case of using the thermocouples, the surface temperature can be measured only in a small area of the steam tube. Thus, it is difficult to obtain the temperature distribution of the surface temperature in the steam tube.

The present disclosure is directed to provision of a heat transfer tube having a structure capable of reliably measuring the surface temperature of a steam tube and/or the like over a wide area, and also a method for manufacturing the heat transfer tube.

### [Solution to Problem]

The heat transfer tube according to the invention is described in claim 1.

Other features of the present disclosure will become apparent from the description in the present specification and the accompanying drawings.

### [Advantageous Effects of Invention]

According to the present disclosure, it is possible to reliably measure the surface temperature of a steam tube and/or the like over a wide area.

### [Brief Description of Drawings]

Fig. 1 is a diagram illustrating an example of an overall configuration of a thermal power plant in which a heat transfer tube according to an embodiment of the present invention is used as a steam tube.
Fig. 2 is an exploded perspective view illustrating a heat transfer tube according to a first embodiment.
Fig. 3 is a perspective view illustrating a heat transfer tube according to a first embodiment.
Fig. 4 is a top view illustrating a heat transfer tube according to a first embodiment.
Fig. 5 is an exploded perspective view illustrating a heat transfer tube according to a second embodiment.
Fig. 6 is a perspective view illustrating a heat transfer tube according to a second embodiment.
Fig. 7 is a top view illustrating a heat transfer tube according to a second embodiment.
Fig. 8 is an exploded perspective view illustrating a heat transfer tube according to a third embodiment.
Fig. 9 is a perspective view illustrating a heat transfer tube according to a third embodiment.
Fig. 10 is a top view illustrating a heat transfer tube according to a third embodiment.
Fig. 11 is a diagram illustrating part of a process of manufacturing a heat transfer tube according to a third embodiment.
Fig. 12 is a cross-sectional view illustrating an example in which a bridging tube is used with heat transfer tubes according to a first or second embodiment.
Fig. 13 is an enlarged cross-sectional view illustrating part of an example in which a bridging tube is used with heat transfer tubes according to a first or second embodiment.

### [Description of Embodiments]

At least the following matters will be apparent from the description of the specification and the attached drawings.

### <<Overall Configuration of Thermal Power Plant>>

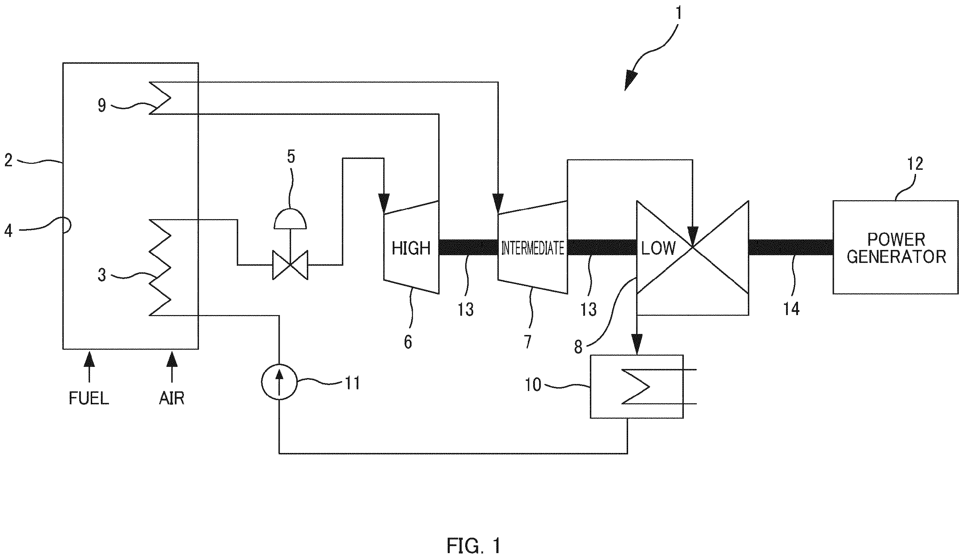

Fig. 1 is a diagram illustrating an example of an overall configuration of a thermal power plant in which a heat transfer tube according to an embodiment of the present invention is used as a steam tube.

A thermal power plant 1 comprises a boiler 2, a steam generator 3, a water wall 4, a steam valve 5, a high-pressure turbine 6, an intermediate-pressure turbine 7, a low-pressure turbine 8, a reheater 9, a condenser 10, a feed pump 11, and a power generator 12.

The boiler 2 is a heat exchanger that mixes an externally-supplied fuel (e.g., pulverized coal) with air to generate a combustion gas, and transforms water into vapor using the heat of the combustion gas. The boiler 2 houses the steam generator 3, the water wall 4, and the reheater 9. The steam generator 3 comprises an economizer (not shown) that preheats water supplied from the condenser 10, and a superheater (not shown) that additionally heats saturated steam supplied from the water wall 4, to convert the saturated steam into superheated steam. The water wall 4 forms the housing of the boiler 2, and turns the preheated water into the saturated steam and supplies the saturated steam to the superheater. The steam valve 5 is a regulating valve that controls the flow rate of the superheated steam generated by the steam generator 3.

The high-pressure turbine 6, the intermediate-pressure turbine 7, and the low-pressure turbine 8 share the same single rotating shaft 13, which is coupled to the rotating shaft of the power generator 12. Upon being supplied with the superheated steam (first steam) generated by the steam generator 3, via the steam valve 5, the high-pressure turbine 6 expands the first steam and supplies the expanded steam (second steam) to the reheater 9 in the boiler 2. The reheater 9 reheats the second steam, and supplies the reheated steam (third steam) to the intermediate-pressure turbine 7. The intermediate-pressure turbine 7 expands the third steam, and supplies the expanded steam (fourth steam) to the low-pressure turbine 8. The low-pressure turbine 8 expands the fourth steam.

The condenser 10 condenses the gas exhausted after the low-pressure turbine 8 expands the fourth steam, thereby converting the exhaust gas into condensate. The feed pump 11 raises the pressure of the condensate generated by the condenser 10, and supplies the condensate to the steam generator 3 in the boiler 2 as feed water.

Then, to generate power, the power generator 12 is driven by the power generated when the fourth steam is expanded.

A heat transfer tube according to an embodiment of the present disclosure is used to form a superheater tube (steam tube) configuring the superheater in the steam generator 3 and a reheater tube (steam tube) configuring the reheater 9 in order to measure the surface temperatures of the superheater tube and the reheater tube. Details will be given later. Note that, for convenience of explanation, the superheater tube and the reheater tube are hereinafter referred to as heat transfer tubes 100 (300).

### ===Heat Transfer Tube===

### <<First Embodiment>>

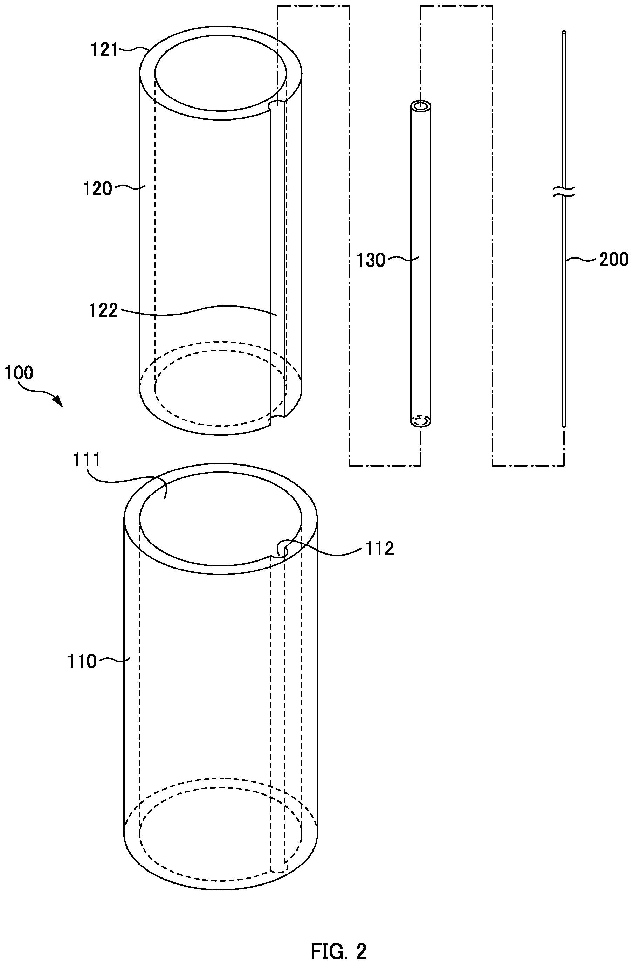

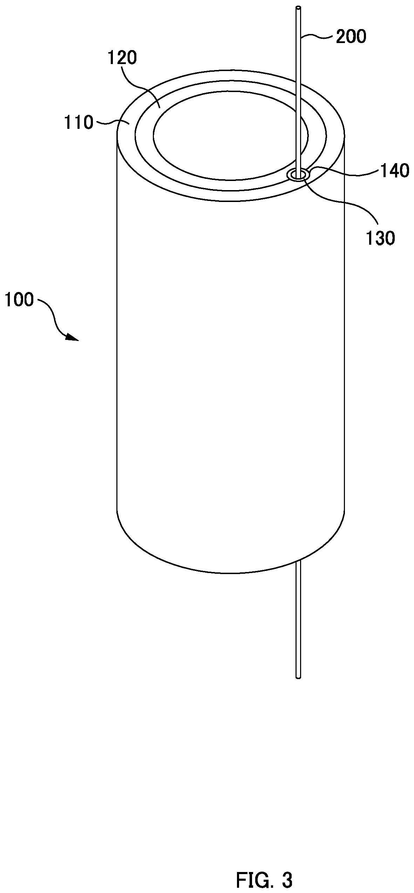

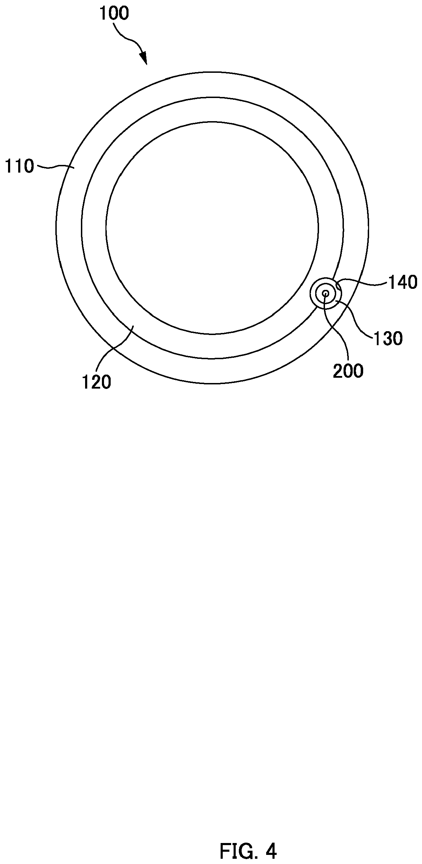

Fig. 2 is an exploded perspective view illustrating a heat transfer tube according to a first embodiment. Fig. 3 is a perspective view illustrating the heat transfer tube according to the first embodiment. Fig. 4 is a top view illustrating the heat transfer tube according to the first embodiment.

A heat transfer tube 100 is a double tube having a structure capable of measuring the surface temperature of the heat transfer tube 100 using an optical fiber 200.

The heat transfer tube 100 comprises an outer tube 110, an inner tube 120, and an insertion tube 130, to enable measurement of the surface temperature of the heat transfer tube 100 using the optical fiber 200.

The outer tube 110 is a hollow cylindrical tube made of metal (e.g., SUS304, SUS316). An inner groove 112 is continuously formed, for example, by cutting, in an inner circumferential surface 111 of the outer tube 110, the inner groove 112 having, for example, a semi-cylndrical shape and extending in the longitudinal direction of the outer tube 110 from the upper opening to the lower opening of the outer tube 110.

The inner tube 120 is a hollow cylindrical tube which is made of metal (e.g., SUS304, SUS316), and forms a double tube with the outer tube 110 such that the inner tube 120 is inserted into the outer tube 110. The inner tube 120 is formed of a tube containing the same metal material(s) as the outer tube 110. An outer groove 122 is continuously formed, for example, by cutting, in an outer circumferential surface 121 of the inner tube 120, the outer groove 122 having, for example, a semi-cylndrical shape and extending in the longitudinal direction of the inner tube 120 from the upper opening to the lower opening of the inner tube 120. The outer diameter of the inner tube 120 is substantially the same as the inner diameter of the outer tube 110, and is set to substantially such a diameter that the outer circumferential surface 121 of the inner tube 120 comes in close contact with the inner circumferential surface 111 of the outer tube 110 when the inner tube 120 is inserted into the outer tube 110.

The inner tube 120 is inserted into the outer tube 110 such that the inner circumferential surface 111 and the outer circumferential surface 121 are in close contact with each other while the inner groove 112 and the outer groove 122 keep such a relative positional relationship that they face each other. This forms a double tube from the outer tube 110 and the inner tube 120. With the inner groove 112 and the outer groove 122 facing each other, a cylndrical insertion hole 140 is continuously formed in a region of close contact between the outer tube 110 and the inner tube 120, extending from the upper opening to the lower opening of the outer tube 110 and the inner tube 120.

The insertion tube 130 has the same length as the outer tube 110 and the inner tube 120, and is inserted into the insertion hole 140 so as to be in close contact therewith. The insertion tube 130 is formed of a tube containing the same metal material(s) as the outer tube 110 and the inner tube 120. The optical fiber 200 is inserted into the insertion tube 130 to measure the temperature inside the insertion tube 130 as the surface temperature of the heat transfer tube 100.

When pulsed light enters the optical fiber 200, the pulsed light travels while slightly scattering inside the optical fiber 200. The scattering light includes Raman scattered light (Stokes light and anti-Stokes light), which is temperature-dependent, and thus the temperature of an object to be measured can be measured by detectig the Raman scattered light. In other words, the optical fiber 200 is inserted into the insertion tube 130, thereby being able to substantially measure the surface temperature of the heat transfer tube 100. Note that a temperature measurement method utilizing the temperature dependency of Raman scattered light is well known and thus is not described here.

It is assumed in the first embodiment that the thickness of the outer tube 110 is, for example, 1.5 mm, the diameter of the inner groove 112 and the outer groove 122 is, for example, 0.75 mm, which corresponds to half the thickness of the outer tube 110 (the diameter of the insertion hole 140 is 1.5 mm), the diameter of the insertion tube 130 is, for example, slightly smaller than 1.5 mm, and the diameter of the optical fiber 200 is, for example, 0.2 mm. The straight tube portion of the heat transfer tube 100 is formed in units of, for example, 10 m, and the bent tube portion of the heat transfer tube 100 is formed in units of, for example, 1 m. Then, in accordance with the size and the shape of the boiler 2, the straight tube portion(s) and the bent tube portion(s) of the heat transfer tube 100 are coupled together by welding so as to continue.

The outer tube 110 and the inner tube 120 may form a double tube, for example, by shrink fitting. Specifically, the outer tube 110 and the inner tube 120 may form a double tube such that the outer tube 110 is heated to expand, the inner tube 120 is inserted into the outer tube 110, and then the outer tube 110 is cooled to contract, to thereby bring the inner circumferential surface 111 of the outer tube 110 and the outer circumferential surface 121 of the inner tube 120 to be in close contact with each other. Also, the outer tube 110 and the inner tube 120 may form a double tube, for example, by explosive bonding. Specifically, the outer tube 110 and the inner tube 120 may form a double tube such that, after an explosive is filled in the small space between the inner circumferential surface 111 of the outer tube 110 and the outer circumferential surface 121 of the inner tube 120, the power of explosion of the explosive is used to bond the inner circumferential surface 111 of the outer tube 110 and the outer circumferential surface 121 of the inner tube 120 together.

### <<Second Embodiments

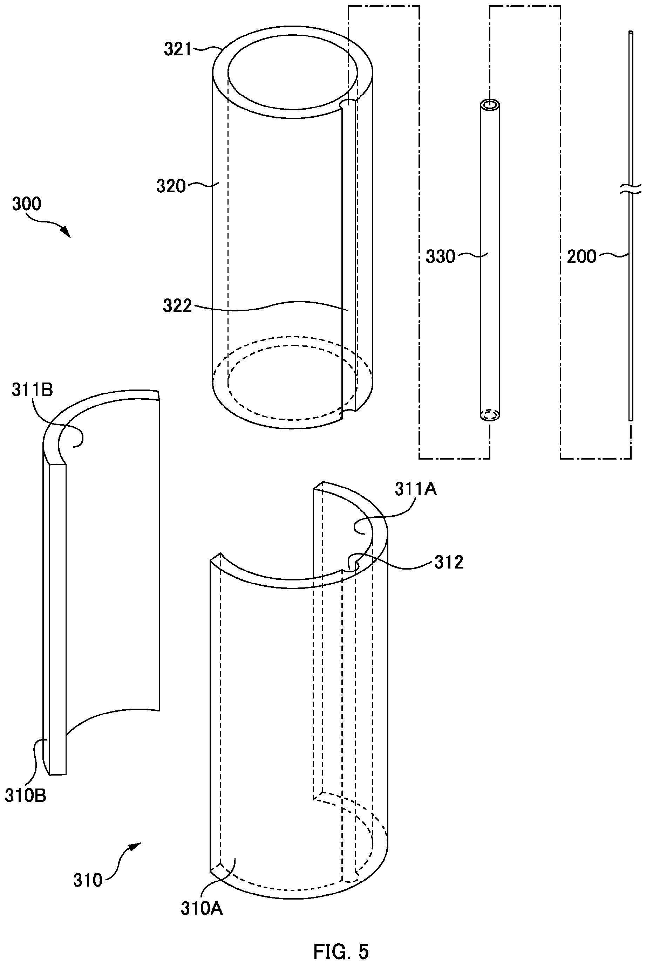

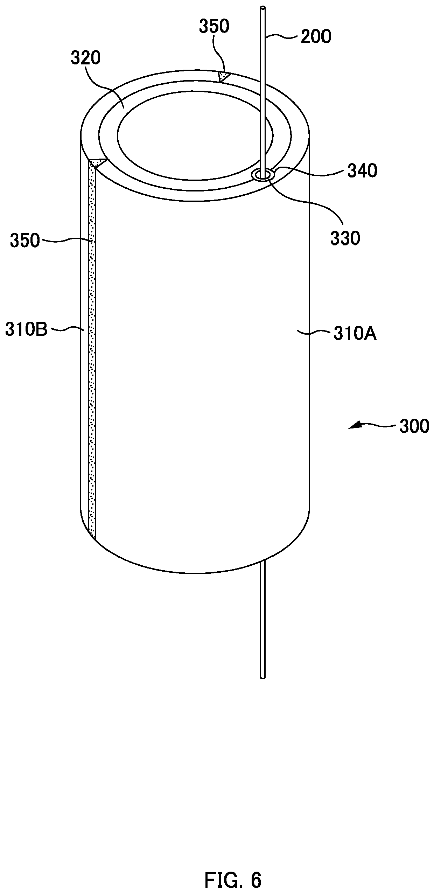

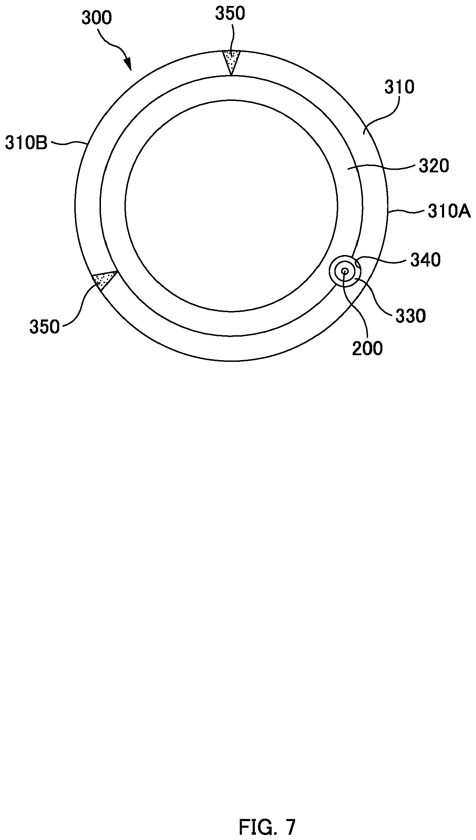

Fig. 5 is an exploded perspective view illustrating a heat transfer tube according to a second embodiment. Fig. 6 is a perspective view illustrating the heat transfer tube according to the second embodiment. Fig. 7 is a top view illustrating the heat transfer tube according to the second embodiment.

A heat transfer tube 300 is a double tube having a structure capable of measuring the surface temperature of the heat transfer tube 300 using an optical fiber 200.

The heat transfer tube 300 comprises an outer tube 310, an inner tube 320, and an insertion tube 330, to enable measurement of the surface temperature of the heat transfer tube 300 using the optical fiber 200.

The outer tube 310 is made of metal (e.g., SUS304, SUS316) and includes a first segment portion 310A and a second segment portion 310B. The first segment portion 310A and the second segment portion 310B have shapes obtained by cutting the outer tube 310 into two parts along the longitudinal direction thereof. In an example, the first segment portion 310A is to be in close contact with a region corresponding to 2/3 of an outer circumferential surface 321 of the inner tube 320, and the second segment portion 310B is to be in close contact with the remaining region corresponding to 1/3 of the outer circumferential surface 321 of the inner tube 320. Alternatively, the first segment portion 310A and the second segment portion 310B each may have a hollow semi-cylindrical shape such that they respectively come into close contact with regions each corresponding to 1/2 of the outer circumferential surface 321 of the inner tube 320. The first segment portion 310A and the second segment portion 310B form a hollow cylindrical shape, with an inner circumferential surface 311A of the first segment portion 310A and an inner circumferential surface 311B of the second segment portion 310B coming into close contact with the outer circumferential surface 321 of the inner tube 320. And, the first segment portion 310A and the second segment portion 310B are integrally formed by welding 350 of end faces of the first segment portion 310A to end faces of the second segment portion 310B that are respectively adjacent to the end faces of the first segment portion 310A using a super heat resistant alloy (e.g., Inconel). An inner groove 312 is continuously formed, for example, by cutting, in the inner circumferential surface 311A of the first segment portion 310A, the inner groove 312 having, for example, a semi-cylndrical shape and extending in the longitudinal direction of the first segment portion 310A from the upper part to the lower part of the first segment portion 310A.

The inner tube 320 is made of metal (e.g., SUS304, SUS316), has a hollow cylindrical shape, and forms a double tube with the outer tube 310 such that the inner tube 320 is surrounded by the outer tube 310. The inner tube 320 is formed of a tube containing the same metal material(s) as the outer tube 310. An outer groove 322 is continuously formed, for example, by cutting, in the outer circumferential surface 321 of the inner tube 320, the outer groove 322 having, for example, a semi-cylndrical shape and extending in the longitudinal direction of the inner tube 320 from the upper opening to the lower opening of the inner tube 320. The outer diameter of the inner tube 320 is substantially the same as the inner diameter of the outer tube 310, and is set to substantially such a diameter that the outer circumferential surface 321 of the inner tube 320 is in close contact with the inner circumferential surface 311 of the outer tube 310 when the inner tube 320 is surrounded by the outer tube 310.

The outer tube 310 surrounds the inner tube 320 such that the inner circumferential surfaces 311A, 311B and the outer circumferential surface 321 are in close contact with each other while the inner groove 312 and the outer groove 322 keep such a relative positional relationship that they face each other. This forms a double tube from the outer tube 310 and the inner tube 320. With the inner groove 312 and the outer groove 322 facing each other, a cylndrical insertion hole 340 is formed continuously in a region of close contact between the outer tube 310 and the inner tube 320, extending from the upper opening to the lower opening of the outer tube 310 and the inner tube 320.

The insertion tube 330 has the same length as the outer tube 310 and the inner tube 320, and is inserted into the insertion hole 340 so as to be in close contact with the insertion hole 340. The insertion tube 330 is formed of a tube containing the same metal material(s) as the outer tube 310 and the inner tube 320. The optical fiber 200 is inserted into the insertion tube 330 to measure the temperature inside the insertion tube 330 as the surface temperature of the heat transfer tube 300.

It is assumed in the second embodiment that the thickness of the outer tube 310 is, for example, 1.5 mm, the diameter of the inner groove 312 and the outer groove 322 is, for example, 0.75 mm, which corresponds to half the thickness of the outer tube 310 (the diameter of the insertion hole 340 is 1.5 mm), the diameter of the insertion tube 330 is, for example, slightly smaller than 1.5 mm, and the diameter of the optical fiber 200 is, for example, 0.2 mm. The straight tube portion of the heat transfer tube 300 is formed in units of, for example, 10 m, and the bent tube portion of the heat transfer tube 300 is formed in units of, for example, 1 m. Then, in accordance with the size and shape of the boiler 2, the straight tube portion(s) and the bent tube portion(s) of the heat transfer tube 300 are coupled together by welding so as to continue.

### <<Third Embodiments

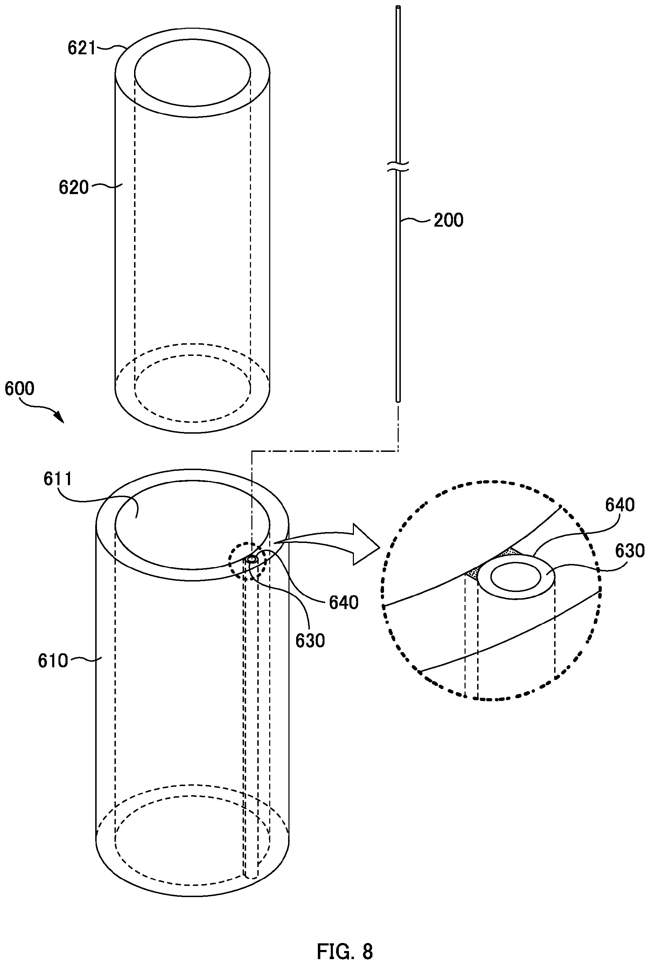

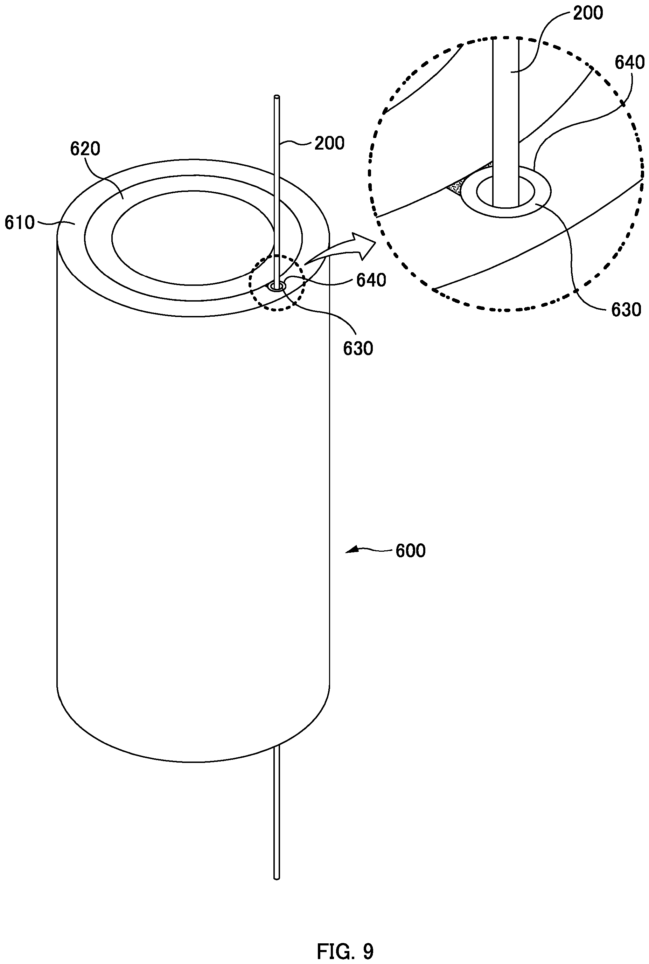

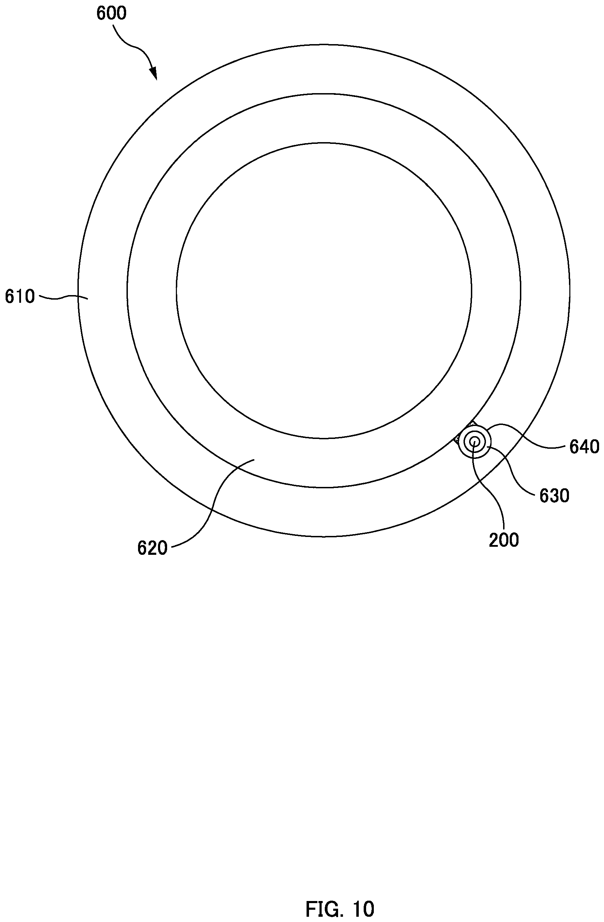

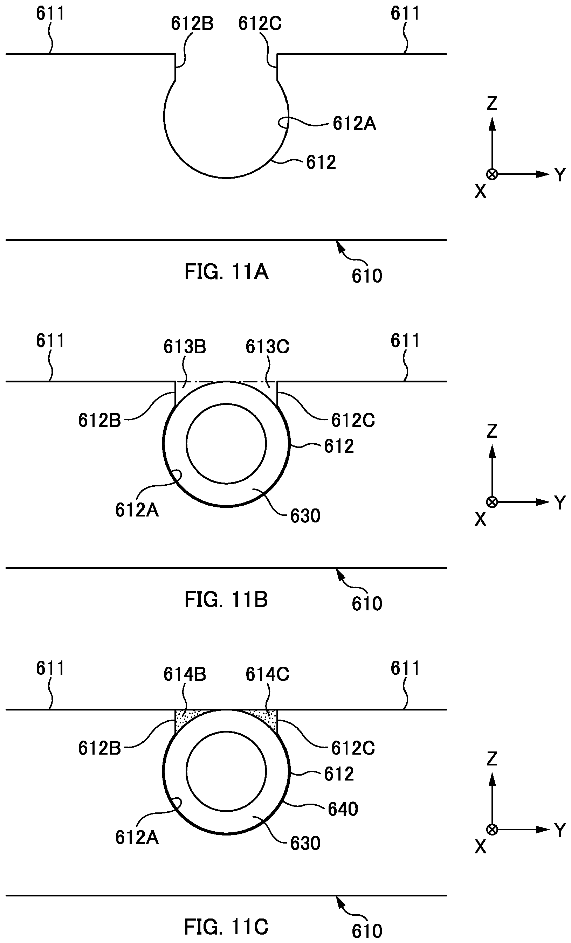

Fig. 8 is an exploded perspective view illustrating a heat transfer tube according to a third embodiment. Fig. 9 is a perspective view illustrating the heat transfer tube according to the third embodiment. Fig. 10 illustrating a top view of the heat transfer tube according to the third embodiment. Fig. 11 is a diagram illustrating part of a process of manufacturing the heat transfer tube according to the third embodiment.

A heat transfer tube 600 is a double tube having a structure capable of measuring the surface temperature of the heat transfer tube 600 using an optical fiber 200.

The heat transfer tube 600 comprises an outer tube 610, an inner tube 620, and an insertion tube 630, to enable measurement of the surface temperature of the heat transfer tube 100 using the optical fiber 200.

The outer tube 610 is a hollow cylindrical tube made of metal (e.g., SUS304, SUS316). An inner groove 612 is continuously formed, for example, by cutting, in an inner circumferential surface 611 of the outer tube 610, the inner groove 612 having, for example, substantially a U-shape and extending in the longitudinal direction of the outer tube 610 from the upper opening to the lower opening of the outer tube 610. The inner groove 612 is a groove into which the insertion tube 630 is to be inserted. The inner groove 612 has an inner circumferential surface that is curved such that the outer circumferential surface of the insertion tube 630 comes into close contact with the inner groove 612 over a range of 180° or more when the insertion tube 630 is inserted thereinto. Also, the inner groove 612 has such a depth that the insertion tube 630 inserted thereinto does not protrude from the inner circumferential surface 611 of the outer tube 610 when the insertion tube 630 is inserted thereinto. For example, the inner groove 612 has a depth such that a tangent line to the outer circumferential surface of the insertion tube 630 comes in contact with the inner circumferential surface 611 of the outer tube 610.

The inner tube 620 is a hollow cylindrical tube which is made of metal (e.g., SUS304, SUS316) and forms a double tube with the outer tube 610 such that the inner tube 620 is inserted into the outer tube 610. The inner tube 620 is formed of a tube containing the same metal material(s) as the outer tube 610. The outer diameter of the inner tube 620 is substantially the same as the inner diameter of the outer tube 610 and is set to substantially such a diameter that an outer circumferential surface 621 of the inner tube 620 comes into close contact with the inner circumferential surface 611 of the outer tube 610 when the inner tube 620 is inserted into the outer tube 610.

Then, the inner tube 620 is inserted into the outer tube 610 such that the inner circumferential surface 611 and the outer circumferential surface 621 are in close contact with each other, thereby forming a double tube from the outer tube 610 and the inner tube 620.

The insertion tube 630 has the same length as the outer tube 610 and the inner tube 620, and is inserted so as to be in close contact with the inner circumferential surface of the inner groove 612. The insertion tube 630 is formed of a tube containing the same metal material(s) as the outer tube 610 and the inner tube 620. The optical fiber 200 is inserted into the insertion tube 630 to measure the temperature inside the insertion tube 630 as the surface temperature of the heat transfer tube 600.

Before the inner tube 620 is inserted into the outer tube 610, the insertion tube 630 needs to be previously attached to the inner groove 612 so as to be integral with the outer tube 610. With reference to Fig. 11, the following describes an example of a process of fixing the insertion tube 630 to the inner groove 612. Note that, in Fig. 11, the X-axis represents a direction along the longitudinal direction of the outer tube 610, the Y-axis represents a direction orthogonal to the longitudinal direction of the outer tube 610 (the circumferential direction of the outer tube 610), and the Z-axis represents a direction (the thickness direction of the outer tube 610) orthogonal to both of the longitudinal direction of the outer tube 610 and the direction orthogonal to the longitudinal direction.

First, the substantially U-shaped inner groove 612 is continuously formed, for exmaple, by cutting, to extend in the longitudinal direction of the outer tube 610 from the upper opening to the lower opening of the outer tube 610. The inner groove 612 has: an inner circumferential surface 612A to come into close contact with the outer circumferential surface of the insertion tube 630 over a range of, for example, 270°; and inner side surfaces 612B, 612C that extend in the thickness direction of the outer tube 610 respectivley from the ends of the inner circumferential surface 612A toward the inner circumferential surface 611 of the outer tube 610. Also, the inner groove 612 has such a depth that a tangent line to the outer circumferential surface of the insertion tube 630 comes in contact with the inner circumferential surface 611 of the outer tube 610 (Fig. 11A).

Next, the insertion tube 630 is inserted into the inner groove 612 such that the outer circumferential surface of the insertion tube 630 comes into close contact with the inner circumferential surface 612A of the inner groove 612. In this state, a tangent line to the outer circumferential surface of the insertion tube 630 (indicated by the dashed dotted line) is in contact and continuous with the inner circumferential surface 611 of the outer tube 610. Spaces 613B, 613C are respectively formed, extending in the longitudinal direction of the outer tube 610, between the outer circumferential surface of the insertion tube 630 and the inner side surfaces 612B, 612C (Fig. 11B).

Next, stainless steel (e.g., SUS304, SUS316) is used to perform buildup welding to the spaces 613B, 613C, and thereafter, buildups 614B, 614C are polished so as to be flush with the inner circumferential surface 611 of the outer tube 610. This fixes the insertion tube 630 to the outer tube 610 at a position closest to the inner tube 620 that forms a double tube together with the outer tube 610. Note that the space surrounded by the inner groove 612 and the buildups 614B, 614C corresponds to an insertion hole 640 into which the insertion tube 630 is to be inserted (Fig. 11C).

It is assumed in the third embodiment that the thickness of the outer tube 610 is, for example, 1.5 mm, the diameter of the insertion tube 630 is, for example, slightly smaller than 1.5 mm, and the diameter of the optical fiber 200 is, for example, 0.2 mm. Also, the straight tube portion of the heat transfer tube 600 is formed in units of, for example, 10 m, and the bent tube portion of the heat transfer tube 600 is formed in units of, for example, 1 m. Then, in accordance with the size and shape of the boiler 2, the straight tube portion(s) and the bent tube portion(s) of the heat transfer tube 600 are coupled together by welding so as to continue.

The outer tube 610 and the inner tube 620 may form a double tube, for example, by shrink fitting. Specifically, the outer tube 610 and the inner tube 620 may form a double tube such that the outer tube 610 is heated to expand, the inner tube 620 is inserted into the outer tube 610, and then the outer tube 610 is cooled to contract such that the inner circumferential surface 611 of the outer tube 610 comes into close contact with the outer circumferential surface 621 of the inner tube 620. Also, the outer tube 610 and the inner tube 620 may form a double tube, for example, by explosive bonding. Specifically, the outer tube 610 and the inner tube 620 may form a double tube such that, an explosive is filled in the small space between the inner circumferential surface 611 of the outer tube 610 and the outer circumferential surface 621 of the inner tube 620, and then the power of explosion of the explosive is used to bond the inner circumferential surface 611 of the outer tube 610 and the outer circumferential surface 621 of the inner tube 620 together.

### ===Bridging Tube===

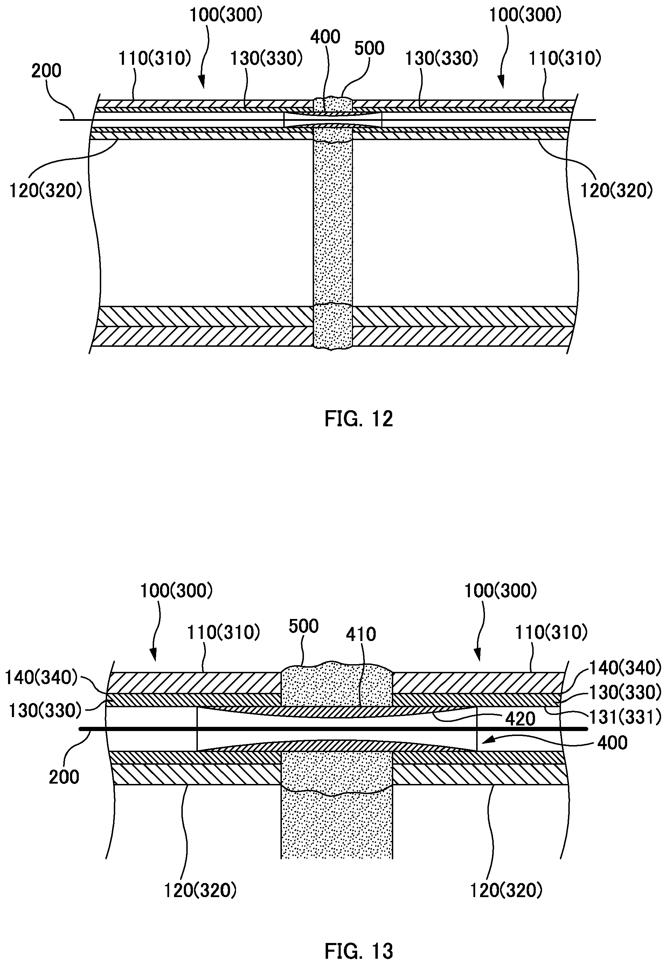

Fig. 12 is a cross-sectional diagram illustrating an example in which a bridging tube is used with the heat transfer tube according to the first or second embodiment. Fig. 13 is an enlarged sectional view illustrating part of the example in which a bridging tube is used with the heat transfer tubes according to the first or second embodiment.

In a case where opposing end faces of two heat transfer tubes 100 (300) are coupled to each other by welding 500, the optical fiber 200, which is to be passed between the two heat transfer tubes 100 (300), needs to be protected from damage caused by the welding 500.

A bridging tube 400 is a hollow cylindrical tube made of metal (e.g., SUS304, SUS316) that joins the insertion tubes 130 (330) exposed at the opposing end faces of the two heat transfer tubes 100 (300). The bridging tube 400 is formed of a tube containing the same metal material (s) as the heat transfer tube 100 (300). The bridging tube 400 has one end to be inserted into the insertion tube 130 (330) of one of the heat transfer tubes 100 (300), and the other end to be inserted into the insertion tube 130 (330) of the other one of the heat transfer tubes 100 (300). The outer diameter of the bridging tube 400 is substantially the same as the inner diameter of the insertion tube 130 (330), and is set to substantially such a diameter that an outer circumferential surface 410 of the bridging tube 400 comes into close contact with an inner circumferential surface 131 (331) of the insertion tube 130 (330) when the bridging tube 400 is inserted into the insertion tube 130 (330). In addition, the inner diameter of the bridging tube 400 is set to such a diameter that the inner diameter thereof gradually increases from the center toward both ends of the bridging tube 400, and is substantially the same as the outer diameter of the bridging tube 400 at both ends of the bridging tube 400. In other words, an inner circumferential surface 420 of the bridging tube 400 is formed of a curved surface, on the whole, such that the inner circumferential surface 420 becomes gradually wider from the center toward the ends of the bridging tube 400 and smoothly continuous with the inner circumferential surfaces 131 (331) of the insertion tubes 130 (330) at the ends of the bridging tube 400. In yet other words, the thickness of the bridging tube 400 is set, with a predetermined curvature, so as to gradually descrease from the center toward the ends of the bridging tube 400 and become substantially zero at the ends of the bridging tube 400.

As such, inserting the bridging tube 400 between the insertion tubes 130 (330) exposed at the opposing end faces of the two heat transfer tubes 100 (300) before welding the opposing end faces of the two heat transfer tubes 100 (300) makes it possible to relialy ensure formation of a path for continuously inserting the optical fiber 200 into the two heat transfer tubes 100 (300). In addition, the inner circumferential surface 420 of the bridging tube 400 forms such a curved surface as to be smoothly continuous with the inner circumferential surfaces 131 (331) of the insertion tubes 130 (330), thereby being able to reliably protect the optical fiber 200 from being damaged. In addition, joining two heat transfer tubes 100 (300) adjacent to each other using the bridging tube 400 enables coupling a plurality of heat transfer tubes 100 (300) in various shapes, such as straight and/or bent tubes, through welding, according to the size and shape of the boiler 2. That is, the surface temperature of the heat transfer tubes 100 (300) provided inside the boiler 2 can be measured in a wide area.

Note that the bridging tube 400 can be inserted into the insertion tubes 630 exposed from the two heat transfer tubes 600, in order to join two heat transfer tubes 600 adjacent to each other, in the third embodiment.

### ---Summary---

As has been described hereinabove, a heat transfer tube 100 (300, 600) comprising: an outer tube 110 (310, 610); an inner tube 120 (320, 620) to be inserted into the outer tube 110 (310, 610) so as to be in close contact with the outer tube 110 (310, 610), to form a double tube with the outer tube 110 (310, 610); an insertion hole 140 (340, 640) formed, between an outer circumferential surface of the outer tube 110 (310, 610) and an inner circumferential surface of the inner tube, penetrating in a longitudinal direction of the outer tube 110 (310, 610) and the inner tube 120 (320, 620); and an insertion tube 130 (330, 630) to be inserted into the insertion hole 140 (340, 640), the insertion tube 130 (330, 630) allowing an optical fiber 200 to be inserted into the insertion tube 130 (330, 630) to measure a surface temperature of the double tube.

In addition, the outer tube 110 (310) has an inner groove 112 (312) formed in an inner circumferential surface 111 (311A) of the outer tube 110 (310), the inner groove extending in the longitudinal direction of the outer tube 110 (310), and the inner tube 112 (312) has an outer groove 122 (322) formed in an outer circumferential surface 121 (321) of the inner tube 120 (320), the outer groove extending in the longitudinal direction of the inner tube 120 (320), the inner tube 120 (320) being inserted into the outer tube 110 (310) such that the insertion hole 140 (340) is formed with the outer groove 122 (322) facing the inner groove 112 (312). For example, the inner groove 112 (312) and the outer groove 122 (322) each have a semi-cylndrical shape, the insertion hole 140 (340) has a cylndrical shape, and the insertion tube 130 (330) has a hollow cylindrical shape.

In addition, the outer tube 610 has the insertion hole 640 between the outer circumferential surface and an inner circumferential surface of the outer tube 610, the insertion hole extending in the longitudinal direction of the outer tube 610. For example, the insertion hole 640 has a cylndrical shape, and the insertion tube 630 has a hollow cylindrical shape.

In addition, the outer tube 110 (610) and the inner tube 120 (620) form the double tube such that the outer tube 110 (610) is heated and expanded, the inner tube 120 (620) is inserted into the outer tube 110 (610), and then the outer tube 110 (610) is cooled to bring an inner circumferential surface 111 (611) of the outer tube 110 (610) and an outer circumferential surface 112 (612) of the inner tube 120 (620) into close contact with each other.

In addition, the outer tube 110 (610) and the inner tube 120 (620) form the double tube such that an inner circumferential surface 111 (611) of the outer tube 110 (610) and an outer circumferential surface 121 (621) of the inner tube 120 (620) are coupled to each other using power of explosion of an explosive.

In addition, the outer tube 310 has a first segment portion 310A to come into close contact with a part of an outer circumferential surface 321 of the inner tube 320, and a second segment portion 310B to come into close contact with a remaining part of the outer circumferential surface of the inner tube 320, and the outer tube 310 and the inner tube 320 form the double tube such that end faces of the first segment portion 310A and end faces of the second segment portion 310B that are respectively adjacent to the end faces of the first segment portion 310A are welded together.

In addition, a bridging tube 400 is further comprised, which is used to weld an end face of one heat transfer tube 100 (300, 600) and an end face of another heat transfer tube 100 (300, 600), the bridging tube 400 being inserted into insertion tubes 130 (330, 630) that are respectively inserted into the one heat transfer tube and the other heat transfer tube 100 (300, 600), such that the bridging tube 400 comes in close contact with the insertion tubes 130 (330, 630).

In addition, the bridging tube 400 has an inner circumferential surface that gradually widens toward both of the one heat transfer tube and the other heat transfer tube 100 (300, 600).

In addition, the inner circumferential surface 420 of the bridging tube 400 has such a shape as to be continuous with respective inner circumferential surfaces 131 (331, 631) of the insertion tubes 130 (330, 630) at end faces of the bridging tube 400.

In addition, the inner circumferential surface 420 of the bridging tube 400 has such a shape as to widen, while forming curved face, toward both of the one heat transfer tube and the other heat transfer tube 100 (300, 600).

According to the invention, it is possible to measure, over a wide area, a surface temperature of the heat transfer tube 100 (300, 600) provided in a boiler 2.

Embodiments of the present invention described above are simply provided to facilitate the understanding of the present invention and are not in any way to be construed as limiting the scope as determined by the claims.

### [Reference Signs List]

100, 300, 600 heat transfer tube
110, 310, 610 outer tube
111, 311A, 420, 611, 612A inner circumferential surface
112, 312, 612 inner groove
120, 320, 620 inner tube
121, 321, 410, 621 outer circumferential surface
122, 322, 622 outer groove
130, 330, 630 insertion tube
140, 340, 640 insertion hole
200 optical fiber
350, 500 welding
400 bridging tube
612B, 612C inner side surface
613B, 613C space
614B, 614C buildup

## Claims

1. A heat transfer tube (100; 300; 600) comprising:
an outer tube (110; 310; 610);
an inner tube (120; 320; 620) inserted into the outer tube (110; 310; 610) so as to be in close contact with the outer tube (110; 310; 610) to form a double tube with the outer tube (110; 310; 610);
an insertion hole (140; 340; 640) formed in a region defined between an outer circumferential surface and an inner circumferential surface of the double tube and extending in a longitudinal direction of the double tube; and
an insertion tube (130; 330; 630) inserted into the insertion hole (140; 340; 640), the insertion tube (130; 330; 630) allowing an optical fiber (200) to be inserted therein to measure a surface temperature of the double tube;
wherein the insertion tube (130; 330; 630) is configured to receive a bridging tube (400) for putting the insertion tube (130; 330; 630) of the double tube in close contact with an insertion tube of a further double tube.

2. The heat transfer tube (100; 300; 600) according to claim 1, wherein
the outer tube (110; 310; 610) has an inner groove (112; 312; 612) formed in an inner circumferential surface (111; 311; 611) thereof, the inner groove (112; 312; 612) extending in the longitudinal direction of the outer tube (110; 310; 610), and
the inner tube (120; 320; 620) has an outer groove (122; 322; 622) formed in an outer circumferential surface (121; 321; 621) thereof, the outer groove (122; 322; 622) extending in the longitudinal direction of the inner tube (120; 320; 620), the inner tube (120; 320; 620) being inserted into the outer tube (110; 310; 610) such that the insertion hole (140; 340; 640) is formed with the outer groove (122; 322; 622) facing the inner groove (112; 312; 612).

3. The heat transfer tube (100; 300; 600) according to claim 2, wherein
the inner groove (112; 312; 612) and the outer groove (122; 322; 622) each have a semi-cylindrical shape,
the insertion hole (140; 340; 640) has a cylindrical shape, and
the insertion tube (130; 330; 630) has a hollow cylindrical shape.

4. The heat transfer tube (600) according to claim 1, wherein
the region is defined between the outer circumferential surface and an inner circumferential surface (611) of the outer tube (610).

5. The heat transfer tube (600) according to claim 4, wherein
the insertion hole (640) has a cylindrical shape, and
the insertion tube (630) has a hollow cylindrical shape.

6. The heat transfer tube (100; 300; 600) according to any one of claims 1 to 5, wherein the outer tube (110; 310; 610) and the inner tube (120; 320; 620) form the double tube such that the outer tube (110; 310; 610) is heated and expanded, the inner tube (120; 320; 620) is inserted into the outer tube (110; 310; 610), and then the outer tube (110; 310; 610) is cooled to bring an inner circumferential surface (111; 311; 611) of the outer tube (110; 310; 610) and an outer circumferential surface (121; 321; 621) of the inner tube (120; 320; 620) into close contact with each other.

7. The heat transfer tube (100; 300; 600) according to any one of claims 1 to 5, wherein the outer tube (110; 310; 610) and the inner tube (120; 320; 620) form the double tube such that an inner circumferential surface (111; 311; 611) of the outer tube (110; 310; 610) and an outer circumferential surface (121; 321; 621) of the inner tube (120; 320; 620) are coupled to each other by exploding an explosive filled in a small space between an inner circumferential surface (111, 311, 611) of the outer tube (110; 310; 610) and an outer circumferential surface (121, 321, 621) of the inner tube (120; 320; 620) .

8. The heat transfer tube (300) according to any one of claims 1 to 3 wherein
the outer tube (310) has
a first segment portion (310A) to come into close contact with a part of an outer circumferential surface (321) of the inner tube (320), and
a second segment portion (310B) to come into close contact with a remaining part of the outer circumferential surface (321) of the inner tube (320), and
the outer tube (310) and the inner tube (320) form the double tube such that end faces of the first segment portion (310A) and end faces of the second segment portion (310B) that are respectively adjacent to the end faces of the first segment portion (310A) are welded together.

9. The heat transfer tube (100; 300; 600) according to any one of claims 1 to 8, further comprising
the bridging tube (400) for welding an end face of one double tube and an opposing end face of the further double tube.

10. The heat transfer tube (100; 300; 600) according to claim 9, wherein the bridging tube (400) has an inner circumferential surface (420) that gradually widens toward both of the double tube and the further double tube.

11. The heat transfer tube (100; 300; 600) according to claim 10, wherein the inner circumferential surface (420) of the bridging tube (400) is continuous with respective inner circumferential surfaces of the insertion tube (130; 330; 630) of the double tube and the insertion tube of the further double tube at end faces of the bridging tube (400).

12. The heat transfer tube (100; 300; 600) according to claim 10 or claim 11, wherein the inner circumferential surface (420) of the bridging tube (400) widens, while forming curved face, toward both the double tube and the further double tube.

13. A method for manufacturing a heat transfer tube (100; 300; 600) comprising:
a first step of inserting an inner tube (120; 320; 620) into an outer tube (110; 310; 610) such that the outer tube (110; 310; 610) comes in close contact with the inner tube (120; 320; 620) so as to form a double tube;
a second step of forming an insertion hole (140; 340; 640) in a region defined between an outer circumferential surface and an inner circumferential surface of thedouble tube and extending in a longitudinal direction of the double tube; and
a third step of inserting, into the insertion hole (140; 340; 640), an insertion tube (130; 330; 630) allowing an optical fiber (200) to be inserted therein to measure a surface temperature of the double tube,
wherein the insertion tube (130; 330; 630) is configured to receive a bridging tube (400) for putting the insertion tube (130; 330; 630) of the double tube in close contact with an insertion tube of a further double tube.

14. The method for manufacturing a heat transfer tube (100; 300; 600) according to claim 13, wherein
the first step is inserting the inner tube (120; 320; 620) into the outer tube (110; 310; 610) such that an inner circumferential surface (111; 311; 611) of the outer tube (110; 310; 610) and an outer circumferential surface (121, 321, 621) of the inner tube (120; 320; 620) come into close contact with each other to form the double tube,
the second step is, when inserting the inner tube (120; 320; 620) into the outer tube (110; 310; 610), causing an inner groove (112; 312; 612) that is formed in the inner circumferential surface (111; 311; 611) of the outer tube (110; 310; 610) and that extends in the longitudinal direction of the outer tube (110; 310; 610), and an outer groove (122; 322; 622) that is formed in the outer circumferential surface (121; 321; 621) of the inner tube (120; 320; 620) and that extends in the longitudinal direction thereof to face each other, to form the insertion hole (140; 340; 640), and
the third step is inserting the insertion tube (130; 330; 630) into the insertion hole (140; 340; 640) after inserting the inner tube (120; 320; 620) into the outer tube (110; 310; 610).

15. The method for manufacturing a heat transfer tube (100; 300; 600) according to claim 13, wherein
the first step is inserting the inner tube (620) into the outer tube (610) such that an inner circumferential surface (611) of the outer tube (610) and an outer circumferential surface (621) of the inner tube (620) come in close contact with each other, to form the double tube,
the second step is, before inserting the inner tube (620) into the outer tube (610), forming the insertion hole (640) in a region between an inner circumferential surface (611) and the outer circumferential surface (611) of the outer tube (610) , and
the third step is inserting the insertion tube (630) into the insertion hole (640) after inserting the inner tube (620) into the outer tube (610).

16. The method for manufacturing a heat transfer tube (100; 300; 600) according to claim 15, wherein
the second step includes
forming an inner groove (612) that is to be in contact with an outer circumferential surface of the insertion tube (630), the inner groove (612) extending in the longitudinal direction of the outer tube (610), and
building up a metal material in a space between the inner groove (612) and the insertion tube (630) after inserting the insertion tube (620) into the inner groove (612), such that the built-up metal material is flush with the inner circumferential surface (611) of the outer tube (610).

## Patentansprüche

1. Wärmeübertragungsrohr (100; 300; 600), aufweisend:
ein Außenrohr (110; 310; 610);
ein Innenrohr (120; 320; 620), das in das Außenrohr (110; 310; 610) eingesetzt ist, so dass es in engem Kontakt mit dem Außenrohr (110; 310; 610) steht, um ein Doppelrohr mit dem Außenrohr (110; 310; 610) zu bilden;
ein Einführungsloch (140; 340; 640), das in einem zwischen einer äußeren Umfangsfläche und einer inneren Umfangsfläche des Doppelrohrs definierten Bereich gebildet ist und sich in Längsrichtung des Doppelrohrs erstreckt; und
ein Einführungsrohr (130; 330; 630), das in das Einführungsloch (140; 340; 640) eingeführt ist, wobei das Einführungsrohr (130; 330; 630) das Einführen einer optischen Faser (200) darin ermöglicht, um eine Oberflächentemperatur des Doppelrohrs zu messen;
wobei das Einführungsrohr (130; 330; 630) konfiguriert ist, um ein Überbrückungsrohr (400) aufzunehmen, um das Einführungsrohr (130; 330; 630) des Doppelrohrs in engen Kontakt mit einem Einführungsrohr eines weiteren Doppelrohrs zu bringen.

2. Wärmeübertragungsrohr (100; 300; 600) nach Anspruch 1, wobei
das Außenrohr (110; 310; 610) eine Innennut (112; 312; 612) aufweist, die in einer inneren Umfangsfläche (111; 311; 611) desselben gebildet ist, wobei sich die Innennut (112; 312; 612) in Längsrichtung des Außenrohrs (110; 310; 610) erstreckt, und
das Innenrohr (120; 320; 620) eine Außennut (122; 322; 622) aufweist, die in einer äußeren Umfangsfläche (121; 321; 621) desselben gebildet ist, wobei sich die Außennut (122; 322; 622) in der Längsrichtung des Außenrohrs (120; 320; 620) erstreckt, wobei das Innenrohr (120; 320; 620) in das Außenrohr (110; 310; 610) derart eingesetzt wird, dass das Einführungsloch (140; 340; 640) mit der Außennut (122; 322; 622) der Innennut (112; 312; 612) zugewandt gebildet wird.

3. Wärmeübertragungsrohr (100; 300; 600) nach Anspruch 2, wobei
die Innennut (112; 312; 612) und die Außennut (122; 322; 622) jeweils eine halbzylindrische Form aufweisen,
das Einführungsloch (140; 340; 640) eine zylindrische Form aufweist, und
das Einführungsrohr (130; 330; 630) eine hohlzylindrische Form aufweist.

4. Wärmeübertragungsrohr (600) nach Anspruch 1, wobei
der Bereich zwischen der äußeren Umfangsfläche und einer inneren Umfangsfläche (611) des Außenrohrs (610) definiert ist.

5. Wärmeübertragungsrohr (600) nach Anspruch 4, wobei
das Einführungsloch (640) eine zylindrische Form aufweist, und
das Einführungsrohr (630) eine hohlzylindrische Form aufweist.

6. Wärmeübertragungsrohr (100; 300; 600) nach einem der Ansprüche 1 bis 5, wobei das Außenrohr (110; 310; 610) und das Innenrohr (120; 320; 620) das Doppelrohr bilden, so dass das Außenrohr (110; 310; 610) erhitzt und aufgeweitet wird, das Innenrohr (120; 320; 620) in das Außenrohr (110; 310; 610) eingeführt wird, und dann das Außenrohr (110; 310; 610) abgekühlt wird, um eine innere Umfangsfläche (111; 311; 611) des Außenrohrs (110; 310; 610) und eine äußere Umfangsfläche (121; 321; 621) des Innenrohrs (120; 320; 620) in engen Kontakt miteinander zu bringen.

7. Wärmeübertragungsrohr (100; 300; 600) nach einem der Ansprüche 1 bis 5, wobei das Außenrohr (110; 310; 610) und das Innenrohr (120; 320; 620) das Doppelrohr bilden, so dass eine innere Umfangsfläche (111; 311; 611) des Außenrohrs (110; 310; 610) und eine äußere Umfangsfläche (121; 321; 621) des Innenrohrs (120; 320; 620) durch Explosion eines Sprengstoffs, der in einen kleinen Raum zwischen einer inneren Umfangsfläche (111, 311, 611) des Außenrohrs (110; 310; 610) und einer äußeren Umfangsfläche (121, 321, 621) des Innenrohrs (120; 320; 620) aufgefüllt ist, miteinander verbunden werden.

8. Wärmeübertragungsrohr (300) nach einem der Ansprüche 1 bis 3, wobei
das Außenrohr (310) aufweist
ein erstes Segmentteil (310A), das in engen Kontakt mit einem Teil einer Außenumfangsfläche (321) des Innenrohrs (320) kommt, und
ein zweites Segmentteil (310B), um in engen Kontakt mit einem verbleibenden Teil der Außenumfangsfläche (321) des Innenrohrs (320) zu kommen, und
das Außenrohr (310) und das Innenrohr (320) das Doppelrohr bilden, so dass die Endflächen des ersten Segmentteils (310A) und die Endflächen des zweiten Segmentteils (310B), die jeweils den Endflächen des ersten Segmentteils (310A) gegenüberliegen, miteinander verschweißt sind.

9. Wärmeübertragungsrohr (100; 300; 600) nach einem der Ansprüche 1 bis 8, das ferner das Überbrückungsrohr (400) zum Verschweißen einer Endfläche des einen Doppelrohrs und einer gegenüberstehenden Endfläche des weiteren Doppelrohrs aufweist.

10. Wärmeübertragungsrohr (100; 300; 600) nach Anspruch 9, wobei das Überbrückungsrohr (400) eine innere Umfangsfläche (420) aufweist, die sich zunehmend sowohl in Richtung des Doppelrohrs als auch des weiteren Doppelrohrs verbreitert.

11. Wärmeübertragungsrohr (100; 300; 600) nach Anspruch 10, wobei die innere Umfangsfläche (420) des Überbrückungsrohrs (400) mit den jeweiligen inneren Umfangsflächen des Einführungsrohrs (130; 330; 630) des Doppelrohrs und des Einführungsrohrs des weiteren Doppelrohrs an den Endflächen des Überbrückungsrohrs (400) durchgehend ist.

12. Wärmeübertragungsrohr (100; 300; 600) nach Anspruch 10 oder 11, wobei sich die innere Umfangsfläche (420) des Überbrückungsrohrs (400) unter Bildung einer gekrümmten Fläche sowohl in Richtung des Doppelrohrs als auch des weiteren Doppelrohrs erweitert.

13. Ein Verfahren zur Herstellung eines Wärmeübertragungsrohrs (100; 300; 600), aufweisend:
einen ersten Schritt des Einführens eines Innenrohrs (120; 320; 620) in ein Außenrohr (110; 310; 610), so dass das Außenrohr (110; 310; 610) in engen Kontakt mit dem Innenrohr (120; 320; 620) kommt, um ein Doppelrohr zu bilden;
einen zweiten Schritt des Bildens eines Einführungslochs (140; 340; 640) in einem Bereich, der zwischen einer äußeren Umfangsfläche und einer inneren Umfangsfläche des Doppelrohrs definiert ist und sich in einer Längsrichtung des Doppelrohrs erstreckt; und
einen dritten Schritt des Einführens eines Einführungsrohrs (130; 330; 630) in das Einführungsloch (140; 340; 640), das das Einführen einer optischen Faser (200) darin ermöglicht, um eine Oberflächentemperatur des Doppelrohrs zu messen,
wobei das Einführungsrohr (130; 330; 630) konfiguriert ist, um ein Überbrückungsrohr (400) aufzunehmen, um das Einführungsrohr (130; 330; 630) des Doppelrohrs in engen Kontakt mit einem Einführungsrohr eines weiteren Doppelrohrs zu bringen.

14. Verfahren zur Herstellung eines Wärmeübertragungsrohrs (100; 300; 600) nach Anspruch 13, wobei
der erste Schritt das Einführen des Innenrohrs (120; 320; 620) in das Außenrohr (110; 310; 610) ist, so dass eine innere Umfangsfläche (111; 311; 611) des Außenrohrs (110; 310; 610) und eine äußere Umfangsfläche (121, 321, 621) des Innenrohrs (120; 320; 620) in engen Kontakt miteinander kommen, um das Doppelrohr zu bilden,
der zweite Schritt darin besteht, dass beim Einführen des Innenrohrs (120; 320; 620) in das Außenrohr (110; 310; 610) eine Innennut (112; 312; 612), die in der inneren Umfangsfläche (111; 311; 611) des Außenrohrs (110; 310; 610) gebildet ist und sich in Längsrichtung des Außenrohrs (110; 310; 610) erstreckt, und eine Außennut (122; 322; 622), die in der Außenumfangsfläche (121; 321; 621) des Innenrohrs (120; 320; 620) ausgebildet ist und sich in dessen Längsrichtung erstreckt, einander gegenüberliegen das Einführungsloch (140; 340; 640) bilden, und
der dritte Schritt das Einführen des Einführungsrohrs (130; 330; 630) in das Einführungsloch (140; 340; 640) nach dem Einführen des Innenrohrs (120; 320; 620) in das Außenrohr (110; 310; 610) ist.

15. Verfahren zur Herstellung eines Wärmeübertragungsrohrs (100; 300; 600) nach Anspruch 13, wobei
der erste Schritt das Einführen des Innenrohrs (620) in das Außenrohr (610) ist, so dass eine innere Umfangsfläche (611) des Außenrohrs (610) und eine äußere Umfangsfläche (621) des Innenrohrs (620) in engen Kontakt miteinander kommen, um das Doppelrohr zu bilden,
der zweite Schritt darin besteht, vor dem Einführen des Innenrohrs (620) in das Außenrohr (610) das Einführungsloch (640) in einem Bereich zwischen einer inneren Umfangsfläche (611) und der äußeren Umfangsfläche (611) des Außenrohrs (610) zu bilden, und
der dritte Schritt ist das Einführen des Einführungsrohrs (630) in das Einführungsloch (640) nach dem Einführen des Innenrohrs (620) in das Außenrohr (610).

16. Verfahren zur Herstellung eines Wärmeübertragungsrohrs (100; 300; 600) nach Anspruch 15, wobei
der zweite Schritt folgendes aufweist
Bilden einer Innennut (612), die mit einer äußeren Umfangsfläche des Einführungsrohrs (630) in Kontakt stehen soll, wobei sich die Innennut (612) in Längsrichtung des Außenrohrs (610) erstreckt, und
Aufschichten eines Metallmaterials in einem Raum zwischen der Innennut (612) und dem Einführungsrohr (630) nach dem Einführen des Einführungsrohrs (620) in die Innennut (612), so dass das aufgeschichtete Metallmaterial mit der inneren Umfangsfläche (611) des Außenrohrs (610) bündig ist.

## Revendications

1. Tuyau de transfert de chaleur (100; 300; 600) comprenant :
un tuyau extérieur (110; 310; 610) ;
un tuyau intérieur (120; 320; 620) inséré dans le tuyau extérieur (110; 310; 610) de manière à être en contact étroit avec le tuyau extérieur (110; 310; 610) pour former un tuyau double avec le tuyau extérieur (110; 310; 610) ;
un orifice d'insertion (140; 340; 640) formé dans une région définie entre une surface circonférentielle extérieure et une surface circonférentielle intérieure du tuyau double et s'étendant dans une direction longitudinale du tuyau double ; et
un tuyau d'insertion (130; 330; 630) inséré dans l'orifice d'insertion (140; 340; 640), le tuyau d'insertion (130; 330; 630) permettant d'y insérer une fibre optique (200) pour mesurer une température de surface du tuyau double ;
dans lequel le tuyau d'insertion (130; 330; 630) est configuré pour recevoir un tuyau de pontage (400) afin de mettre le tuyau d'insertion (130; 330; 630) du tuyau double en contact étroit avec un tuyau d'insertion d'un tuyau double supplémentaire.

2. Tuyau de transfert de chaleur (100; 300; 600) selon la revendication 1, dans lequel
le tuyau extérieur (110; 310; 610) comporte une rainure intérieure (112; 312; 612) formée dans une surface circonférentielle intérieure (111; 311; 611) de celui-ci, la rainure intérieure (112; 312; 612) s'étendant dans la direction longitudinale du tuyau extérieur (110; 310; 610), et
le tuyau intérieur (120; 320; 620) comporte une rainure extérieure (122; 322; 622) formée dans une surface circonférentielle extérieure (121; 321; 621) de celui-ci, la rainure extérieure (122; 322; 622) s'étendant dans la direction longitudinale du tuyau intérieur (120; 320; 620), le tuyau intérieur (120; 320; 620) étant inséré dans le tuyau extérieur (110; 310; 610) de sorte que l'orifice d'insertion (140; 340; 640) soit formé avec la rainure extérieure (122; 322; 622) faisant face à la rainure intérieure (112; 312; 612).

3. Tuyau de transfert de chaleur (100; 300; 600) selon la revendication 2, dans lequel
la rainure intérieure (112; 312; 612) et la rainure extérieure (122; 322; 622) ont chacune une forme semi-cylindrique,
l'orifice d'insertion (140; 340; 640) a une forme cylindrique, et
le tuyau d'insertion (130; 330; 630) a une forme cylindrique creuse.

4. Tuyau de transfert de chaleur (600) selon la revendication 1, dans lequel
la région est définie entre la surface circonférentielle extérieure et une surface circonférentielle intérieure (611) du tuyau extérieur (610).

5. Tuyau de transfert de chaleur (600) selon la revendication 4, dans lequel
l'orifice d'insertion (640) a une forme cylindrique, et
le tuyau d'insertion (630) a une forme cylindrique creuse.

6. Tuyau de transfert de chaleur (100; 300; 600) selon l'une quelconque des revendications 1 à 5, dans lequel le tuyau extérieur (110; 310; 610) et le tuyau intérieur (120; 320; 620) forment le tuyau double de sorte que le tuyau extérieur (110; 310; 610) est chauffé et expansé, le tuyau intérieur (120; 320; 620) est inséré dans le tuyau extérieur (110; 310; 610), puis le tuyau extérieur (110; 310; 610) est refroidi pour mettre en contact étroit une surface circonférentielle intérieure (111; 311; 611) du tuyau extérieur (110; 310; 610) et une surface circonférentielle extérieure (121; 321; 621) du tuyau intérieur (120; 320; 620).

7. Tuyau de transfert de chaleur (100; 300; 600) selon l'une quelconque des revendications 1 à 5, dans lequel le tuyau extérieur (110; 310; 610) et le tuyau intérieur (120; 320; 620) forment le tuyau double de sorte qu'une surface circonférentielle intérieure (111; 311; 611) du tuyau extérieur (110; 310; 610) et une surface circonférentielle extérieure (121; 321; 621) du tuyau intérieur (120; 320; 620) soient couplées l'une à l'autre par l'explosion d'un explosif rempli dans un petit espace entre une surface circonférentielle intérieure (111; 311; 611) du tuyau extérieur (110; 310; 610) et une surface circonférentielle extérieure (121; 321; 621) du tuyau intérieur (120; 320; 620).

8. Tuyau de transfert de chaleur (300) selon l'une quelconque des revendications 1 à 3, dans lequel
le tuyau extérieur (310) a
une première partie de segment (310A) pour venir en contact étroit avec une partie d'une surface circonférentielle extérieure (321) du tuyau intérieur (320), et
une seconde partie de segment (310B) pour venir en contact étroit avec une partie restante de la surface circonférentielle extérieure (321) du tuyau intérieur (320), et
le tuyau extérieur (310) et le tuyau intérieur (320) forment le tuyau double de sorte que les faces d'extrémité de la première partie de segment (310A) et les faces d'extrémité de la seconde partie de segment (310B) qui sont respectivement adjacentes aux faces d'extrémité de la première partie de segment (310A) soient soudées ensemble.

9. Tuyau de transfert de chaleur (100; 300; 600) selon l'une quelconque des revendications 1 à 8, comprenant en outre :
le tuyau de pontage (400) pour le soudage d'une face d'extrémité d'un tuyau double et d'une face d'extrémité opposée du tuyau double supplémentaire.

10. Tuyau de transfert de chaleur (100; 300; 600) selon la revendication 9, dans lequel le tuyau de pontage (400) a une surface circonférentielle intérieure (420) qui s'élargit progressivement vers le tuyau double et le tuyau double supplémentaire.

11. Tuyau de transfert de chaleur (100; 300; 600) selon la revendication 10, dans lequel la surface circonférentielle intérieure (420) du tuyau de pontage (400) est continue avec les surfaces circonférentielles intérieures respectives du tuyau d'insertion (130; 330; 630) du tuyau double et du tuyau d'insertion du tuyau double supplémentaire aux faces d'extrémité du tuyau de pontage (400).

12. Tuyau de transfert de chaleur (100; 300; 600) selon la revendication 10 ou la revendication 11, dans lequel la surface circonférentielle intérieure (420) du tuyau de pontage (400) s'élargit, tout en formant une face incurvée, vers le tuyau double et le tuyau double supplémentaire.

13. Procédé de fabrication d'un tuyau de transfert de chaleur (100; 300; 600) comprenant :
une première étape d'insertion d'un tuyau intérieur (120; 320; 620) dans un tuyau extérieur (110; 310; 610) de sorte que le tuyau extérieur (110; 310; 610) entre en contact étroit avec le tuyau intérieur (120; 320; 620) afin de former un tuyau double ;
une deuxième étape de formation d'un orifice d'insertion (140; 340; 640) dans une région définie entre une surface circonférentielle extérieure et une surface circonférentielle intérieure du tuyau double et s'étendant dans une direction longitudinale du tuyau double ; et
une troisième étape d'insertion, dans l'orifice d'insertion (140; 340; 640), d'un tuyau d'insertion (130; 330; 630) permettant d'y insérer une fibre optique (200) pour mesurer une température de surface du tuyau double,
dans lequel le tuyau d'insertion (130; 330; 630) est configuré pour recevoir un tuyau de pontage (400) afin de mettre le tuyau d'insertion (130; 330; 630) du tuyau double en contact étroit avec un tuyau d'insertion d'un tuyau double supplémentaire.

14. Procédé de fabrication d'un tuyau de transfert de chaleur (100; 300; 600) selon la revendication 13, dans lequel
la première étape consiste en l'insertion du tuyau intérieur (120; 320; 620) dans le tuyau extérieur (110; 310; 610) de sorte qu'une surface circonférentielle intérieure (111; 311; 611) du tuyau extérieur (110; 310; 610) et une surface circonférentielle extérieure (121; 321; 621) du tuyau intérieur (120; 320; 620) entrent en contact étroit l'une avec l'autre pour former le tuyau double,
la deuxième étape consiste, lors de l'insertion du tuyau intérieur (120; 320; 620) dans le tuyau extérieur (110; 310; 610), en la formation d'une rainure intérieure (112; 312; 612) qui est formée dans la surface circonférentielle intérieure (111; 311; 611) du tuyau extérieur (110; 310; 610) et qui s'étend dans la direction longitudinale du tuyau extérieur (110; 310; 610), et d'une rainure extérieure (122; 322; 622) qui est formée dans la surface circonférentielle extérieure (121; 321; 621) du tuyau intérieur (120; 320; 620) et qui s'étend dans la direction longitudinale de celui-ci, pour se faire face, afin de former l'orifice d'insertion (140; 340; 640), et
la troisième étape consiste en l'insertion du tuyau d'insertion (130; 330; 630) dans l'orifice d'insertion (140; 340; 640) après avoir inséré le tuyau intérieur (120; 320; 620) dans le tuyau extérieur (110; 310; 610).

15. Procédé de fabrication d'un tuyau de transfert de chaleur (100; 300; 600) selon la revendication 13, dans lequel
la première étape consiste en l'insertion du tuyau intérieur (620) dans le tuyau extérieur (610) de sorte qu'une surface circonférentielle intérieure (611) du tuyau extérieur (610) et une surface circonférentielle extérieure (621) du tuyau intérieur (620) entrent en contact étroit l'une avec l'autre, pour former le tuyau double,
la deuxième étape consiste, avant l'insertion du tuyau intérieur (620) dans le tuyau extérieur (610), en la formation de l'orifice d'insertion (640) dans une région entre une surface circonférentielle intérieure (611) et la surface circonférentielle extérieure (621) du tuyau extérieur (610), et
la troisième étape consiste en l'insertion du tuyau d'insertion (630) dans l'orifice d'insertion (640) après l'insertion du tuyau intérieur (620) dans le tuyau extérieur (610).

16. Procédé de fabrication d'un tuyau de transfert de chaleur (100; 300; 600) selon la revendication 15, dans lequel
la deuxième étape comprend
la formation d'une rainure intérieure (612) qui doit être en contact avec une surface circonférentielle extérieure du tuyau d'insertion (630), la rainure intérieure (612) s'étendant dans la direction longitudinale du tuyau extérieur (610), et
l'accumulation d'un matériau métallique dans un espace entre la rainure intérieure (612) et le tuyau d'insertion (630) après l'insertion du tuyau intérieur (620) dans la rainure intérieure (612), de sorte que le matériau métallique accumulé affleure la surface circonférentielle intérieure (611) du tuyau extérieur (610).
